# EUROPÄISCHE PATENTSCHRIFT

(11) **EP 2 093 434 B1**
(45) Veröffentlichungstag und Bekanntmachung des Hinweises auf die Patenterteilung: **29.12.2010**
(21) Anmeldenummer: 08101776.6
(22) Anmeldetag: 20.02.2008
(51) Int. Cl.: F16B 7/04, F16B 7/18

(54) **Knotenverbinder**
Node connector
Noeud d'assemblage

(43) Veröffentlichungstag der Anmeldung: 26.08.2009
(73) Patentinhaber: Element -System Rudolf Bohnacker GmbH, 89616 Rottenacker (DE)
(72) Erfinder: Breymaier, Werner, 89616 Rottenacker (DE)
(74) Vertreter: Bergmeier, Werner

(56) Entgegenhaltungen:
- CH-A- 438 848
- FR-A- 1 361 398

## Beschreibung

### Gebiet der Erfindung

Die Erfindung betrifft einen Knotenverbinder zum Verbinden von Hohlprofilteilen wie etwa Vierkantprofilen aus Stahlblech oder dergleichen, entsprechend der Merkmale des Oberbegriffs aus Anspruch 1 (FR 1.361.398 A).

### Verwandter Stand der Technik

Es sind vielfältige Arten von Knotenverbindern zur Verbindung von Hohlprofilteilen für Möbelsysteme, Gestellsysteme, Trägersysteme oder dergleichen bekannt und werden für verschiedenste Anwendungen benutzt. Dabei sind eine sichere und stabile Verbindung bei gleichzeitig geringem Gewicht und eine einfache und schnelle Montage wünschenswert.

Das Gebrauchsmuster DE 20 2005 018 474 U1 beschreibt einen Eckverbinder für auf Gehrung zugeschnittene Hohlprofile bestehend aus einem ersten und einem zweiten Winkelprofil, wobei in jedem der Schenkel des außenliegenden Winkelprofils für jeweils einen der Hohlräume der Hohlprofile mindestens eine Gewindebohrung vorgesehen ist, so dass ein durch eine Öffnung eingeführtes Schraubenelement einschraubbar ist, wobei im vollständig eingeschraubten Zustand das außenliegende Winkelprofil gegen die außenseitigen Innenflächen und das innenliegede Winkelprofil gegen die innenseitige Innenfläche der Hohlprofile geführt ist.

Mit dem bekannt Eckverbinder lassen sich einfach und sicher zwei auf Gehrung zugeschnittene Hohlprofile miteinander verbinden. Der Nachteil des in dem Gebrauchsmuster offenbarten Eckverbinders liegt jedoch in der eingeschränkten Flexibilität.

### Zusammenfassung der Erfindung

Der vorliegenden Erfindung liegt daher die Aufgabe zugrunde, einen Knotenverbinder zum Verbinden von Hohlprofilen vorzuschlagen, dessen Grundkonstruktion eine flexible und sichere Verbindung von zweien oder mehreren Hohlprofilteilen miteinander erlaubt.

Gelöst wird die Aufgabe durch einen Knotenverbinder zum Verbinden von Hohlprofilteilen auweisend die Merkmale des Anspruchs 1.

Die Anschlusselemente lassen sich durch Schweißen, Kleben oder dergleichen flexibel an einer bis sechs Seitenwangen des beispielsweise würfelförmigen Knotenelements befestigen. Dadurch kann flexibel beispielsweise nur ein Hohlprofilteil mit dem Knotenverbinder verbunden werden, der dann als Abschlussteil fungiert oder es können zwei bis sechs Hohlprofilteile miteinander verbunden werden.

Durch den im Anschlusselement ausgeformten Einschnitt ist eine erste der zwei gegenüberliegenden Seitenwangen als elastische Zunge ausgebildet, auf welche durch das Schraubelement eine elastische Kraft ausgeübt werden kann, die das Hohlprofil an dem Anschlusselement fixiert. Das Schraubelement ist durch in dem Anschlusselement selbst sowie im Hohlprofilteil ausgebildete Öffnungen leicht von außen schraubbar, so dass der erfindungsgemäße Knotenverbinder eine leichte Fixierung und umgekehrt ein leichtes Lösen des Hohlprofilteils von dem Knotenverbider und damit eine leichte Montage oder Demontage der gewünschten Struktur erlaubt.

Das Gewindeelement kann dabei eine Schraubenmutter sein, die von innen an der zweiten Seitenwange angebracht, vorzugsweise angeschweißt ist. Alternativ kann das Gewindeelement als Gewindebohrung, insbesondere als Fließbohrung ausgebildet sein. Das Schraubelement ist vorzugsweise eine Stiftschraube.

Das Anschlusselement weist eine erste Länge und der Einschnitt zwischen Basisfläche und erster Seitenwange eine zweite Länge auf, welche kleiner als die erste Länge ist, wobei das Verhältnis der zweiten Länge zur ersten Länge 0,7 bis 0,95, vorzugsweise 0,8 bis 0,9 betragen kann.

Das Knotenelement ist vorzugsweise als massives oder auch als hohles Knotenelement ausgebildet.

Das U-förmige Profil der Anschlussteile ist durch Biegen eines gestanzten Blechteiles geformt. So ist der erfindungsgemäße Knotenverbinder schnell und preiswert herstellbar.

### Kurze Beschreibung der Zeichnungen

Die Erfindung wird im Folgenden anhand von konkreten Ausführungsbeispielen unter Bezugnahme auf die beiliegenden Zeichnungen erläutert.
Figur 1 zeigt in perspektivischer Darstellung ein Ausführungsbeispiel eines erfindungsgemäßen Knotenverbinders.
Figur 2a zeigt den Knotenverbinder von Figur 1 mit zwei aufgesteckten Hohlprofilteilen, gesehen aus der in Figur 1 mit X bezeichneten Richtung.
Figur 2b zeigt den Knotenverbinder von Figur 1 ohne Hohlprofilteile, gesehen aus der in Figur 1 mit Y bezeichneten Richtung.
Figur 2c zeigt den Knotenverbinder von Figur ohne Hohlprofilteile, gesehen aus der in Figur 1 mit Z bezeichneten Richtung.
Figur 3 zeigt in Perspektivdarstellung ein Ausführungsbeipiel des erferdingunsgemäßen Anschlusselements.
Figur 4a zeigt das Anschlusselement von Figur 3 in Frontalansicht.
Figur 4b zeigt das Anschlusselement von Figur 3 in Seitenansicht.
Figur 4c zeigt das Anschlusselement von Figur 3 in Aufsicht.
Figur 4d zeigt ein gestanztes Blechteil, aus welchem durch zwei Biegevorgänge das in Figur 3 gezeigte Anschlusselement herstellbar ist.

### Detaillierte Beschreibung der Erfindung

Die Erfindung wird im Folgenden anhand von konkreten Ausführungsbeispielen im Detail erläutert.

Der erfindungsgemäße Knotenverbinder besteht aus einem zentralen, vorzugweise würfelförmigen Knotenelement 10 und zwischen einem und sechs an diesem angebrachten, vorzugsweise angeschweißten Anschlusselementen 20, welche jeweils in ein Hohlprofilteil 30 einschiebbar und an diesen fixierbar sind. Das Hohlprofilteil kann beispielsweise als Vierkant-Stahlprofil oder dergleichen ausgebildet sein.

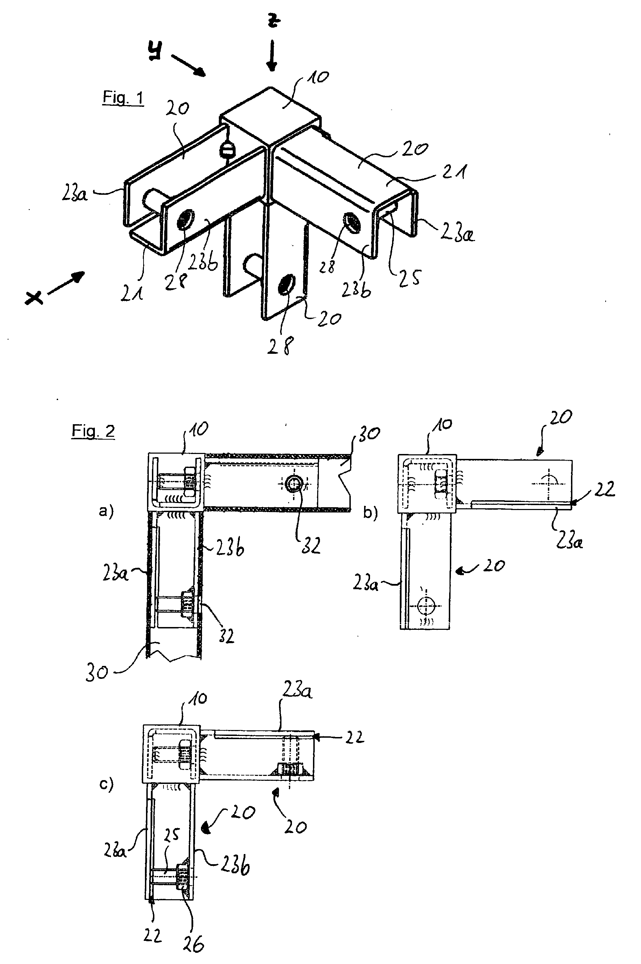

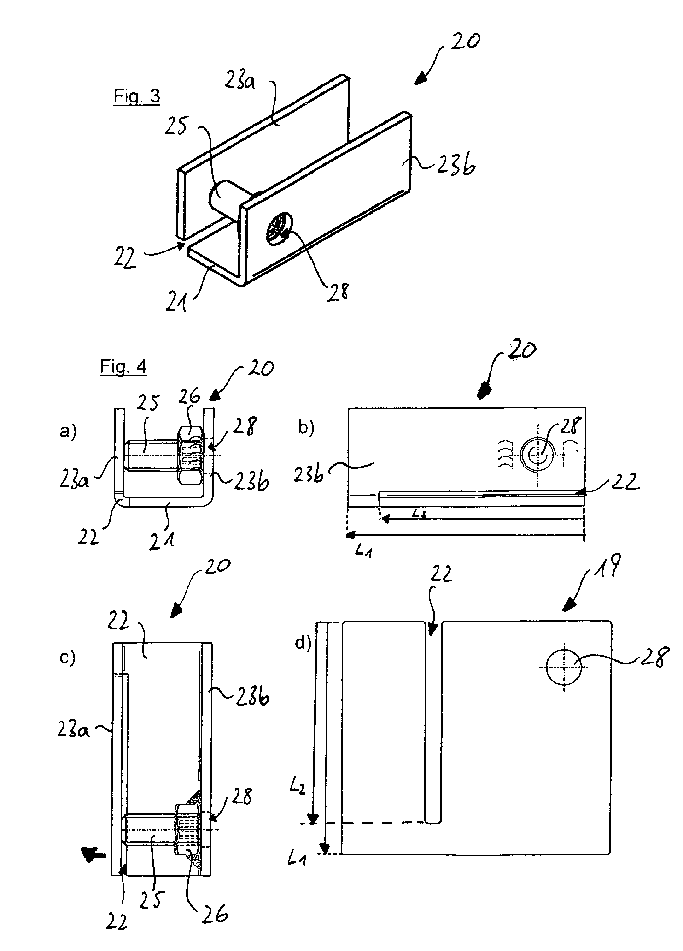

Figur 1 zeigt in perspektivischer Darstellung ein Ausführungsbeispiel eines erfindungsgemäßen Knotenverbinders. An dem zentralen Knotenelement 10 sind bei diesem Ausfürhungsbeispiel jeweils in rechten Winkeln zueinander drei Anschlusselemente 20 angeschweißt, deren Ausführung insbesondere in den Figuren 3 und 4 gut zu erkennen ist. Das Anschlusselement 20 ist als ein insgesamt U-förmiges Profilelement mit einer Basisfläche 21 und zwei sich jeweils daran anschließenden Seitenwangen 23a und 23b. Zwischen der Basisfläche 21 und der ersten Seitenwange 23a ist ein Einschnitt 22 ausgebildet, wodurch die erste Seitenwange 23a zu einer elastischen, federnden Zunge wird. Die Elastizität der ersten Seitenwange 23a wird bestimmt durch das Verhältnis der Länge L2 des Einschnitts zur Gesamtlänge L1 des Anschlusselements. Dieses Verhältnis legt erfindungsgemäß beispielsweise zwischen 0,7 und 0,95, vorzugsweise zwischen 0,8 und 0,9.

An dem dem zentralen Knotenelement 10 gegenüberliegenden Ende des Anschlusselements 20 (d. h . in der Darstellung von Figur 4b auf der rechten Seite und von Figur 4c am unteren Ende) ist in der zweiten Seitenwange 23b ein Gewindeelement 26 vorgesehen, in welches ein Schraubenelement 25, vorzugsweise eine Stiftschraube, einschraubbar ist. Das Gewindeelement 26 kann wie in den Figuren 2 und 4 gezeigt eine an der zweiten Seitenwange 23b angeschweißte Schraubenmutter sein. Es kann alternativ jedoch auch eine Gewindebohrung, insbesondere eine Fließbohrung in der zweiten Seitenwange 23b vorgesehen sein. In jedem Falle ist in der zweiten Seitenwange eine Öffnung 28 vorgesehen, durch welche das Schraubenelement 25 gedreht werden kann, wodurch die elastische erste Seitenwange 23a nach außen gedrückt wird, wie durch einen Pfeil in Figur 4c illustriert ist. Dadurch verkantet sich das Anschlusselement 20 in dem Hohlprofil 30, wodurch eine sichere Verbindung des Knotenverbinders mit den Hohlprofilteilen 30 hergestellt wird (siehe Figur 2a). An der Position der Bohrung 28 in der zweiten Seitenwange 23b ist im Hohlprofilteil 30 ebenfalls eine Öffnung bzw. Bohrung 32 vorgesehen, so dass das Schraubenelement 25 in eingeschobenem Zustand des Anschlusselements im Hohlprofilteil betätigt werden kann. Wie aus Figur 2a ebenfalls hervorgeht, bildet das Knotenelement 10 mit den Außenseiten des Hohlprofilteils 30 eine plane, ästhetisch ansprechende Oberfläche. Der Befestingungsmechanismus über das Schraubelement 25 und die als Federelement ausgebildete Seitenwange 23a ermöglicht dabei eine sichere Befestigung auch bei vergleichsweise großen Masstoleranzen des Hohlprofilteils 30 gegenüber dem Anschlusselement 20.

Wie in den Figuren 1 und 2 dargestellt kann das zentrale Knotenelement 10 vorzugsweise würfelförmig ausgebildet sein, wodurch auf allen sechs Außenkanten des Würfels je nach Bedarf flexibel ein Anschlusselement angebracht, vorzugsweise angeschweißt werden kann. Dies verleiht dem erfindungsgemäßen Knotenverbinder eine besondere Flexibilität.

Darüber hinaus ist der erfindungsgemäße Knotenverbinder einfach und vergleichsweise preisgünstig herstellbar. Das Anschlusselement 20 wird durch zwei Biegevorgänge aus einem gestanzten Blechteil 19 gefertigt, welches in Figur 4d dargestellt ist. Anschließend wird die gewünschte Anzahl von Anschlussteilen an dem Knotenelement 10 festgeschweißt, wobei, wie insbesondere in Figur 1 darstellt ist, das Schraubenelement immer an der dem Knotenelement abgewandten Seite angeordnet ist.

## Patentansprüche

1. Knotenverbinder zum Verbinden von wenigstens zwei Hohlprofilteilen, umfassend:
ein zentrales würfelförmiges Knotenelement (10) und mindestens zwei Anschlußelemente (20), die an dem Knotenelement (10) befestigt sind und jeweils in einen Hohlraum eines Hohlprofilteiles (30) einschiebbar sind, wobei jedes Anschlußelement (20) als ein Profil mit einer Basisfläche (21) und zwei gegenüberliegenden Seitenwangen (23a, 23b) ausgebildet ist und auf seinem dem Knotenelement (10) abgewandten Ende einen Einschnitt (22) zwischen der Basisfläche (21) und einer ersten Seitenwange (23a) aufweist, und wobei an einer zweiten Seitenwange (23b) mittels eines Gewindeelements (26) ein Schraubenelement (25) eingeschraubt ist, welches Schraubenelement (25) durch eine Öffnung (32) im Hohlprofilteil (30) und eine Öffnung (28) in der zweiten Seitenwange (23b) von außen schraubbar ist und so gegen die gegenüberliegende erste Seitenwange (23a) eine elastische Kraft ausübbar ist, welche das Hohlprofilteil (30) an dem Anschlußelement (20) fixiert, **dadurch gekennzeichnet, dass** jedes Anschlußelemente (20) als U-förmiges Profil ausgebildet ist, wobei das Anschlußelement (20) eine erste Länge (L1) aufweist und der Einschnitt (22) zwischen der Basisfläche (21) und der ersten Seitenwange (23a) eine zweite Länge (L2) aufweist, die kleiner als die erste Länge (L1) ist und wobei das U-förmige Profil der Anschlußteile (20) jeweils durch Biegen eines gestanzten Blechteiles (19) geformt ist.

2. Knotenverbinder nach Anspruch 1, wobei das Gewindeelement (26) eine Schraubenmutter ist, welche von innen an der zweiten Seitenwange (23b) angebracht ist.

3. Knotenverbinder nach Anspruch 2, wobei die Schraubenmutter (26) mit der zweiten Seitenwange (23b) verschweißt ist.

4. Knotenverbinder nach Anspruch 1, wobei das Gewindeelement (26) eine Gewindebohrung ist.

5. Knotenverbinder nach Anspruch 4, wobei die Gewindebohrung eine Fließbohrung ist.

6. Knotenverbinder nach einem der vorhergehenden Ansprüche, wobei das Schraubenelement (25) eine Stiftschraube ist.

7. Knotenverbinder nach einem der vorhergehenden Ansprüche, wobei das Anschlußteil (20) mit dem Knotenelement (10) verschweißt ist.

8. Knotenverbinder nach einem der Ansprüche 1-7, wobei das Verhältnis der zweiten Länge (L2) zur ersten Länge (L1) 0,7 bis 0,95, vorzugsweise 0,8 bis 0,9 beträgt.

9. Knotenverbinder nach einem der vorhergehenden Ansprüche, wobei das Knotenelement (10) als massives Knotenelement ausgebildet ist.

10. Knotenverbinder nach einem der vorhergehenden Ansprüche, wobei das Knotenelement (10) als hohles Knotenelement ausgebildet ist.

## Claims

1. A joint connector for connecting at least two hollow profile parts, comprising:
a central cube-shaped joint element (10) and at least two connecting elements (20) attached to the joint element (10), each being able to be inserted into a hollow space of a hollow profile part (30), each connecting element (20) being designed as a profile having a base surface (21) and two opposite side flanges (23a, 23b) and comprising a cut-out region (22) at the end thereof facing away from the joint element (10) between the base surface (21) and a first side flange (23a), and a screw element (25) being screwed into a second side flange (23b) by means of a thread element (26), said screw element (25) being able to be screwed from the outside through an opening (32) in the hollow profile part (30) and an opening (28) in the second side flange (23b) so that an elastic force can be exerted against the opposite first side flange (23a), fixing the hollow profile part (30) to the connecting element (20), **characterized in that** each connecting element (20) is designed as a U-shaped profile, wherein the connecting element (20) comprises a first length (L1) and the cut-out region (22) between the base surface (21) and the first side flange (23a) comprises a second length (L2) that is less than the first length (L1), and wherein the U-shaped profile of each of the connecting parts (20) is formed in each case by bending a stamped sheet metal part (19).

2. The joint connector according to Claim 1, wherein the thread element (26) is a nut attached to the second side flange (23b) from the inside.

3. The joint connector according to Claim 2, wherein the nut (26) is welded to the second side flange (23b).

4. The joint connector according to Claim 1, wherein the threaded element (26) is a threaded bore hole.

5. The joint connector according to Claim 4, wherein the threaded bore hole is a flow bore.

6. The joint connector according to any one of the preceding claims, wherein the screw element (25) is a stud bolt.

7. The joint connector according to any one of the preceding claims, wherein the connecting part (20) is welded to the joint element (10).

8. The joint connector according to any one of the claims 1-7, wherein the ratio of the second length (L2) to the first length (L1) is 0.7 to 0.95, preferably 0.8 to 0.9.

9. The joint connector according to any one of the preceding claims, wherein the joint element (10) is designed as a solid joint element.

10. The joint connector according to any one of the preceding claims, wherein the joint element (10) is designed as a hollow joint element.

## Revendications

1. Noeud d'assemblage pour l'assemblage d'au moins deux profilés creux, comportant :
un élément de noeud cubique central (10) et au moins deux éléments de jonction (20) fixés à l'élément de noeud (10) et pouvant respectivement être introduits dans un espace creux d'un profilé creux (30), sachant que chaque élément de jonction (20) se présente sous la forme d'un profilé avec une surface basale (21) et deux faces latérales (23a, 23b) opposées l'une à l'autre et comporte à son extrémité éloignée de l'élément de noeud (10) une incision (22) entre la surface basale (21) et une première face latérale (23a), et qu'un élément de vis (25) est vissé à une seconde face latérale (23b) au moyen d'un élément fileté (26), lequel élément de vis (25) est vissable à partir de l'extérieur à travers une ouverture (32) du profilé creux (30) et une ouverture (28) de la seconde face latérale (23b), ce qui permet d'exercer sur la première face latérale opposée (23a) une force élastique fixant le profilé (30) à l'élément de jonction (20), **caractérisé en ce que** chaque élément de jonction (20) se présente sous la forme d'un profilé en U, sachant que l'élément de jonction (20) présente une première longueur (L1) et l'incision (22) entre la face basale (21) et la première face latérale (23a) présente une seconde longueur (L2) inférieure à la première longueur (L1), et que le profilé en U des éléments de jonction (20) est formé respectivement par cintrage d'une pièce en tôle estampée (19).

2. Noeud d'assemblage selon la revendication 1, sachant que l'élément fileté (26) est un écrou, qui est monté depuis l'intérieur à la seconde face latérale (23b).

3. Noeud d'assemblage selon la revendication 2, sachant que l'écrou (26) est soudé à la seconde face latérale (23b).

4. Noeud d'assemblage selon la revendication 1, sachant que l'élément fileté (26) est un trou taraudé.

5. Noeud d'assemblage selon la revendication 4, sachant que le trou taraudé est un fluoperçage.

6. Noeud d'assemblage selon l'une des revendications précédentes, sachant que l'élément fileté (25) est un goujon fileté.

7. Noeud d'assemblage selon l'une des revendications précédentes, sachant que l'élément de jonction (20) est soudé à l'élément de noeud (10).

8. Noeud d'assemblage selon l'une des revendications 1-7, sachant que le rapport de la seconde longueur (L2) à la première longueur (L1) est de 0,7 à 0,95, de préférence de 0,8 à 0,9.

9. Noeud d'assemblage selon l'une des revendications précédentes, sachant que l'élément de noeud (10) se présente sous la forme d'un élément de noeud massif.

10. Noeud d'assemblage selon l'une des revendications précédentes, sachant que l'élément de noeud (10) se présente sous la forme d'un élément de noeud creux.
